(19) **Europäisches Patentamt**
**European Patent Office**
**Office européen des brevets**

(11) **EP 3 986 759 B1**

(12) **FASCICULE DE BREVET EUROPEEN**

(45) Date de publication et mention
de la délivrance du brevet:
**09.08.2023 Bulletin 2023/32**

(21) Numéro de dépôt: **20730038.5**

(22) Date de dépôt: **04.06.2020**

(51) Classification Internationale des Brevets (IPC):
**B60T 8/172** (2006.01)     **B60W 40/068** (2012.01)
**B60W 40/064** (2012.01)

(52) Classification Coopérative des Brevets (CPC):
**B60T 8/172; B60W 40/064; B60W 40/068;**
B60T 2210/124

(86) Numéro de dépôt international:
**PCT/EP2020/065515**

(87) Numéro de publication internationale:
**WO 2020/254123 (24.12.2020 Gazette 2020/52)**

(54) **PROCÉDÉ ET DISPOSITIF DE PRÉDICTION D'UN COEFFICIENT DE FRICTION PERSONNALISÉ POUR UN VÉHICULE SUR UN SEGMENT ROUTIER**

VERFAHREN UND VORRICHTUNG ZUR VORHERSAGE EINES ANGEPASSTEN REIBUNGSKOEFFIZIENTEN FÜR EIN FAHRZEUG AUF EINEM STRASSENABSCHNITT

METHOD AND DEVICE FOR PREDICTING A CUSTOMIZED COEFFICIENT OF FRICTION FOR A VEHICLE ON A SECTION OF ROAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2019 FR 1906507**

(43) Date de publication de la demande:
**27.04.2022 Bulletin 2022/17**

(73) Titulaire: **Continental Automotive Technologies GmbH**
**30165 Hannover (DE)**

(72) Inventeurs:
• **LARUELO, Andrea**
**31100 TOULOUSE (FR)**

• **KARN, Holger**
**31100 TOULOUSE (FR)**
• **GOURSOLLE, Anaïs**
**31100 TOULOUSE (FR)**

(74) Mandataire: **Hardouin, Briac**
**Continental Automotive France**
**Service Intellectual Property**
**1, avenue Paul Ourliac**
**31100 Toulouse (FR)**

(56) Documents cités:
**DE-A1-102017 222 568     US-A1- 2018 037 234**
**US-A1- 2018 244 278     US-A1- 2019 047 575**

## Description

### Domaine Technique

L'invention concerne en général l'évaluation de caractéristiques de contact d'un véhicule avec la chaussée. Elle concerne en particulier la prédiction d'un coefficient de friction d'un véhicule particulier sur segment de route particulier.

### Art antérieur

Les pneus sont les seuls éléments de contact entre un véhicule et la chaussée, et représentent par conséquent un facteur prépondérant dans le comportement dynamique et la sécurité d'un véhicule. En particulier, les caractéristiques de friction entre un véhicule et la chaussée sont des données déterminantes pour estimer le comportement dynamique d'un véhicule. Connaître le comportement frictionnel d'un véhicule est particulièrement utile pour améliorer l'efficacité de dispositifs tels que l'ABS (Anti-lock system), l'ESP (Electronic Stability Program), ou encore le TCS (Traction Control System).

Le comportement frictionnel d'un véhicule sur un segment de route particulier est influencé par les caractéristiques du véhicule, en particulier des pneus dont il est équipé, par les conditions météorologiques et par les caractéristiques de la chaussée sur le segment de route considéré.

En raison de la pertinence de ce paramètre, il existe des initiatives pour construire des cartes de friction par segment routier. Ainsi, un véhicule connecté peut obtenir une caractéristique frictionnelle du segment routier sur lequel il circule. Toutefois, le comportement frictionnel d'un véhicule ne résulte pas seulement des caractéristiques de la chaussée, mais il dépend aussi des caractéristiques du véhicule comme le type des pneus dont il est équipé, leur état d'usure ou leur pression de gonflage. Ainsi, sur un même segment routier, différents véhicules ne bénéficieront pas des mêmes conditions d'adhérence. Il existe donc un besoin pour déterminer le comportement frictionnel d'un véhicule particulier sur un segment routier.

EP 2876413 B1 divulgue une méthode pour comparer le comportement frictionnel de différents véhicules. Selon cette méthode, les véhicules spatialement proches les uns des autres transmettent à un serveur des valeurs de friction pneu-route. La méthode tire parti du fait que les véhicules étant proches les uns des autres bénéficient des mêmes conditions de route. Ainsi, les écarts de valeurs de friction constatés sont attribuables aux caractéristiques de ces véhicules. Toutefois, la méthode de EP 2876413 B1 nécessite que tous les véhicules entre lesquels on souhaite comparer le comportement frictionnel mettent en oeuvre un algorithme de détermination de friction. Or, ces algorithmes sont particulièrement complexes et nécessitent des capteurs additionnels.

Le document US 20181244278 A1 présente une méthode pour estimer un coefficient de friction en à partir d'accélérations latérales et d'angles de dérapage mesurés sur des trajectoires courbes. Cette technique ne permet pas d'estimer un coefficient de friction sur une trajectoire rectiligne.

Le document US 2018037234 divulgue également un procédé et un dispositif pour estimer les coefficients de friction d'une roue d'un véhicule par rapport à une surface, comprenant la décomposition d'une trajectoire fournie en segments de courbe individuels, l'estimation d'une force latérale et d'un angle de glissement pour un essieu avant du véhicule, l'attribution de forces latérales et d'angles de glissement respectivement estimés relatifs aux segments de courbe individuels associés.

C'est pourquoi il existe un besoin pour une solution permettant d'estimer le comportement frictionnel d'un véhicule particulier, sans qu'il soit nécessaire d'équiper ce dernier de capteurs spécifiques ou qu'il mette en oeuvre un algorithme de calcul de friction complexe.

### Résumé de l'invention

A cet effet, il est proposé un procédé de prédiction, pour un véhicule automobile circulant sur un premier segment routier, d'un coefficient de friction futur du véhicule sur un second segment routier. Le procédé est remarquable en ce qu'il comprend les étapes suivantes :

- Obtention de paramètres de fonctionnement du véhicule et d'au moins une caractéristique du premier segment routier,
- Calcul d'un indicateur à partir des paramètres de fonctionnement du véhicule obtenus,
- Détermination d'une catégorie frictionnelle du véhicule selon la valeur de l'indicateur calculé et de la au moins une caractéristique du segment routier obtenue,
- Sélection d'un profil de friction du véhicule à partir de la catégorie frictionnelle déterminée,
- Détermination d'un coefficient de friction du véhicule par application du profil sélectionné à au moins une caractéristique du second segment routier.

Il est ainsi proposé de sélectionner un profil de véhicule à partir de son comportement frictionnel déterminé grâce à des paramètres de fonctionnement caractéristiques acquis lors de sa circulation sur un premier segment routier dont les caractéristiques sont connues, puis de déterminer le comportement frictionnel de ce véhicule sur un second segment routier, par application du profil déterminé.

Au sens de l'invention, la catégorie frictionnelle d'un véhicule correspond à un intervalle de valeurs de friction à l'intérieur duquel se situe le coefficient de friction (ou potentiel de friction) du véhicule, pour une caractéristique du segment routier. Une catégorie frictionnelle selon l'invention est définie de telle sorte que des véhicules appartenant à une même catégorie frictionnelle on un coefficient de friction relativement proche pour des conditions de route données.

On notera en outre que les termes « coefficient de friction d'un véhicule », ou « potentiel de friction » correspondent ici au coefficient de frottement des pneus du véhicule sur la chaussée sur laquelle il circule.

La catégorie frictionnelle du véhicule pour un segment sur lequel il circule est déterminée à partir de paramètres de fonctionnement du véhicule et d'une caractéristique du segment routier. Ainsi, le procédé ne nécessite pas que le véhicule soit équipé de moyens d'estimation de la friction. Le procédé peut ainsi être appliqué à large parc de véhicules.

Au sens de l'invention, un profil de friction, ou profil frictionnel, d'un véhicule défini le comportement frictionnel d'un véhicule en fonction d'au moins une caractéristique d'un segment routier. Connaissant le comportement frictionnel d'un véhicule sur un segment particulier, il est possible de déterminer son profil, et à partir du profil, il est possible de déterminer le comportement frictionnel du véhicule sur un autre segment routier, sans disposer des paramètres de fonctionnement du véhicule sur ce second segment routier.

Enfin, à partir de la catégorie frictionnelle déterminée pour le véhicule sur le second segment routier, on détermine un coefficient de friction du véhicule sur le second segment.

Le procédé permet ainsi de prédire un coefficient de friction personnalisé pour un véhicule sur un futur segment routier, sans qu'il soit nécessaire d'adapter le véhicule pour effectuer des mesures ou des estimations de friction. Contrairement à l'art antérieur, le coefficient de friction est connu avant que le véhicule ne s'engage sur le segment considéré. Ainsi, le paramétrage de dispositifs de sécurité tels qu'un ABS ou un ESP peut être réalisée par anticipation. La sécurité est ainsi améliorée.

Selon une réalisation particulière, la au moins une caractéristique des premiers et seconds segments routier comprend, pour un segment considéré :

- Une caractéristique de revêtement de la chaussée, et
- Une caractéristique météo de surface.

Les conditions de friction d'un véhicule sur un segment routier particulier dépendent de caractéristiques propres au véhicule, mais aussi du type de revêtement du segment routier et de la météo à la surface du segment routier. Ainsi, il est proposé de déterminer une catégorie frictionnelle d'un véhicule sur un segment routier selon la valeur d'un indicateur calculé à partir d'au moins un paramètre de fonctionnement du véhicule, d'une caractéristique de revêtement de la chaussée et d'une caractéristique météo à la surface de ce segment routier.

Selon un mode particulier de réalisation, l'indicateur est calculé à partir d'au moins un paramètre de fonctionnement du véhicule sélectionné parmi les paramètres suivants :

- Vitesse de rotation des roues motrices,
- Vitesse de rotation des roues libres,
- Accélération longitudinale,
- Accélération transversale,
- Vitesse du véhicule,
- Couple des roues motrices,
- Pression dans le maitre-cylindre de frein,
- Enfoncement de la pédale de frein.

De tels paramètres sont disponibles sur la plupart des véhicules, par exemple au travers de signaux transitant sur un bus CAN. D'autre part, ces indicateurs permettent de caractériser le comportement dynamique d'un véhicule, et d'établir des corrélations avec le frottement des pneus sur la chaussée. Par exemple, une différence de vitesse de rotation entre des roues motrices et des roues libres, une accélération longitudinale particulière ou encore une pression particulière dans le système de freinage peuvent être mis en relation avec une catégorie frictionnelle particulière d'un véhicule.

Ainsi, le calcul d'un indicateur à partir de ces paramètres est possible sans nécessiter d'adaptation particulière sur un véhicule, et permet d'établir des corrélations avec une catégorie frictionnelle du véhicule.

Dans une réalisation particulière, le profil est sélectionné parmi un ensemble de profils frictionnels, l'ensemble étant déterminé selon les étapes suivantes :

- Collecte, pour une pluralité d'instants de collecte, de données de véhicules d'entrainement, une donnée d'un véhicule d'entrainement comprenant au moins pour un instant donné :

   o Une caractéristique de revêtement routier,
   o Une caractéristique météo de surface, et
   o Un coefficient de friction estimé par le véhicule,

- Détermination d'une pluralité de catégories frictionnelles de véhicules par classification non supervisée des données collectées, de sorte qu'une catégorie frictionnelle particulière comprend des véhicules ayant un coefficient de friction compris dans un même intervalle de valeurs pour une caractéristique de revêtement et une caractéristique météo données,
- Détermination d'au moins un profil de friction de véhicule, un profil de friction étant défini par un ensemble de catégories frictionnelles auxquelles un véhicule particulier est affecté.

Une flotte de véhicules d'entrainement collecte des données en circulant sur un réseau routier. Chaque donnée collectée comprend au moins une caractéristique du revêtement routier sur lequel le véhicule circule, une caractéristique météo à la surface de la chaussée et une estimation d'un coefficient de friction. Pour cela, les véhicules d'entrainement sont équipés de capteurs particuliers, ou mettent en oeuvre un algorithme particulier leur permettant de déterminer un coefficient de friction.

Les données ainsi collectées sont partitionnées en clusters par un algorithme de classification non supervisé. De cette façon, on groupe les véhicules selon leur comportement frictionnel dans des conditions de revêtement et de météo particulières. On obtient ainsi des catégories de véhicules selon les valeurs de frictions observées dans diverses conditions de route, dites catégories frictionnelles. Par exemple, une catégorie frictionnelle particulière peut comprendre des véhicules dont le coefficient de friction est compris dans une plage de valeurs particulière lorsqu'ils circulent sur une voie de type autoroute mouillée. Ainsi, pour un type de revêtement et une météo donnée, on peut obtenir plusieurs catégories frictionnelles.

Les profils frictionnels de véhicules sont alors définis par l'ensemble des catégories frictionnelles auxquelles appartient un véhicule.

Ainsi, en connaissant le profil d'un véhicule, on peut prédire la catégorie frictionnelle auquel appartient ce véhicule dans des conditions de revêtement et de météo particulières.

Selon un mode de réalisation particulier, le procédé est tel que la sélection d'un profil comprend :

- une phase d'entrainement d'un modèle d'apprentissage supervisé comprenant les étapes suivantes :

   o Pour une donnée collectée par un véhicule d'entrainement à un instant de collecte, création d'un vecteur caractéristique comprenant au moins :

      ▪ Un indicateur calculé à partir d'au moins un paramètre de fonctionnement du véhicule d'entrainement collecté à l'instant de collecte,
      ▪ La caractéristique de revêtement routier, et
      ▪ La caractéristique météo de surface,

   o Entrainement d'un modèle d'apprentissage à partir du vecteur caractéristique associé à la catégorie frictionnelle du véhicule déterminée pour la donnée collectée,

- une phase de prédiction au cours de laquelle :

   o une catégorie frictionnelle d'un véhicule circulant sur le premier segment est prédite par application du modèle d'apprentissage à :

      ▪ Un indicateur calculé à partir d'au moins un paramètre de fonctionnement du véhicule sur le premier segment,
      ▪ La caractéristique de revêtement routier du premier segment, et
      ▪ La caractéristique météo de surface du premier segment,

o Un profil de friction est sélectionné au moins à partir de la catégorie prédite pour le véhicule sur le premier segment.

Un modèle d'apprentissage est entraîné à partir des données collectées auprès de la flotte de véhicules d'entraînement. En particulier, le modèle est entraîné avec un indicateur calculé à partir d'au moins un paramètre de fonctionnement du véhicule d'entrainement collecté à l'instant de collecte, une caractéristique du revêtement routier et une caractéristique météo. L'indicateur est calculé à partir de paramètres tels que ceux qui ont été décrits précédemment.

La cible de l'apprentissage supervisé est le groupe déterminé pour le véhicule pour les conditions de revêtement et de météo. Une telle disposition permet d'entraîner un modèle d'apprentissage pour prédire une catégorie frictionnelle d'un véhicule, à partir de paramètres de fonctionnement du véhicule acquis au cours de sa circulation sur un revêtement de route et une météo particulière.

Ainsi, le modèle entraîné peut être appliqué à des paramètres de fonctionnement d'un véhicule acquis au cours de sa circulation sur un revêtement et dans des conditions météo particulière pour déterminer une catégorie frictionnelle de véhicule. La catégorie ainsi obtenue permet de déduire un profil de friction pour le véhicule.

Selon une réalisation particulière, le profil de friction est déterminé à partir d'au moins deux catégories frictionnelles du véhicule déterminées pour au moins deux premiers segments routiers.

Des catégories frictionnelles auxquelles appartient le véhicule sont déterminées sur plusieurs segments routiers à partir de paramètres de fonctionnements, de type de revêtement et de météo obtenus lors de la circulation du véhicule sur ces segments routiers. Le fait de connaître plusieurs catégories frictionnelles du véhicule permet de lever des ambiguïtés lors de la sélection d'un profil pour le véhicule. La sélection d'un profil de friction d'un véhicule est alors réalisée de manière plus fiable.

Selon un autre aspect, l'invention concerne un dispositif de prédiction, pour un véhicule automobile circulant sur un premier segment routier, d'un coefficient de friction futur du véhicule sur un second segment routier, le dispositif comprenant :

- Un module de communication adapté pour obtenir des paramètres de fonctionnement du véhicule et au moins une caractéristique du premier segment routier,
- Un calculateur adapté pour calculer un indicateur à partir des paramètres de fonctionnement du véhicule obtenus,
- Un module de détermination d'une catégorie frictionnelle du véhicule selon la valeur de l'indicateur calculé et de la au moins une caractéristique du segment routier obtenue,
- Un module de sélection d'un profil de friction du véhicule à partir de la catégorie frictionnelle déterminée, et
- Un module de détermination d'un coefficient de friction du véhicule par application du profil sélectionné à au moins une caractéristique du second segment routier.

Selon encore un autre aspect, l'invention concerne une carte routière numérique dans laquelle au moins un segment routier est associé à un coefficient de friction personnalisés pour un véhicule, le coefficient de friction personnalisé étant déterminé par un procédé de prédiction tel que décrit précédemment.

L'invention concerne aussi un véhicule routier comprenant une unité de communication adaptée pour recevoir, en provenance d'un serveur, une carte routière numérique personnalisée telle que décrite ci-avant, et une unité de calcul adaptée pour configurer un équipement de sécurité du véhicule selon la valeur d'un coefficient de friction personnalisé associé à un segment routier particulier, lorsque le véhicule circule sur ledit segment routier.

Selon encore un autre aspect, l'invention concerne un support d'information comportant des instructions de programme d'ordinateur configurées pour mettre en oeuvre les étapes d'un procédé de prédiction tel que décrit précédemment, lorsque les instructions sont exécutées par un processeur.

Le support d'information peut être un support d'information non transitoire tel qu'un disque dur, une mémoire flash, ou un disque optique par exemple.

Le support d'informations peut être n'importe quelle entité ou dispositif capable de stocker des instructions. Par exemple, le support peut comporter un moyen de stockage, tel qu'une ROM, RAM, PROM, EPROM, un CD ROM ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de prédiction.

Les véhicules, cartes, dispositifs, et supports d'informations présentent au moins des avantages analogues à ceux conférés par le procédé auquel ils se rapportent.

**Brève description des dessins**

D'autres caractéristiques, détails et avantages de l'invention apparaîtront à la lecture de la description détaillée ci-après, et à l'analyse des dessins annexés, parmi lesquels :

[Fig. 1] La figure 1 représente un environnement adapté pour mettre en oeuvre l'invention selon un mode particulier de réalisation,

[Fig. 2] La figure 2 représente les principales étapes du procédé de prédiction, selon un mode particulier de réalisation,

[Fig. 3] La figure 3 est un graphique illustrant un exemple de répartition des véhicules d'une flotte de véhicules selon leur comportement frictionnel pour une condition de route particulière,

[Fig. 4] La figure 4 est un graphique représentant des groupes de véhicules obtenus par répartition des véhicules d'une flotte de véhicules selon leur coefficient de friction estimé pour différentes conditions de route,

[Fig. 5a] La figure 5a montre des exemples de profils frictionnels définis à partir de clusters déterminés à partir de données de véhicules d'entrainement, pour différentes conditions de route,

[Fig. 5b] La figure 5b montre un exemple de sélection d'un profil de friction pour un véhicule dont la catégorie frictionnelle est connue pour des conditions de route C1,

[Fig. 5c] La figure 5c illustre une ambiguïté pouvant survenir lors de la sélection d'un profil de véhicule lorsqu'une unique catégorie frictionnelle est connue pour le véhicule,

[Fig. 5d] La figure 5d montre comment une ambiguïté peut être levée lors de la sélection d'un profil de friction lorsque la catégorie frictionnelle d'un véhicule est connue pour au moins deux conditions de route, et

[Fig. 6] La figure 6 illustre de manière schématique un dispositif adapté pour mettre en oeuvre le procédé de prédiction selon un mode particulier de réalisation.

**Description d'un mode de réalisation**

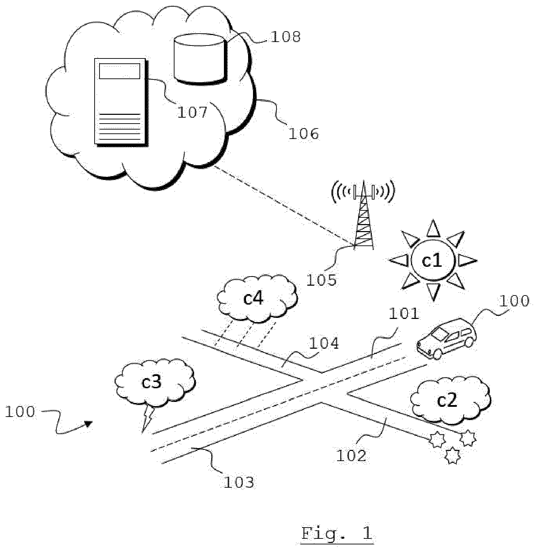

L'environnement de la figure 1 comprend un réseau routier 100 comportant 4 segments routiers 101, 102, 103 et 104.

La figure 1 montre également un véhicule routier 100, par exemple un véhicule de tourisme, circulant sur un premier segment 101 du réseau routier 100. Les segments 101, 102, 103 et 104 bénéficient respectivement de conditions de route C1, C2, C3 et C4. De telles conditions de route sont notamment fonction d'une caractéristique météo de surface (chaussée humide, verglas, neige, route seiche, etc.) et/ou d'une caractéristique du revêtement de la chaussée ou d'un type de route.

Le véhicule 100 est un véhicule connecté adapté pour échanger des messages avec un serveur 107 d'un réseau de communication 106. Pour cela, le véhicule comprend notamment une interface de communication adaptée établir des communications au travers d'un réseau d'accès cellulaire 105, par exemple un réseau d'accès de type 3G, 4G ou 5G ou encore un réseau WiFi ou WiMax. Le véhicule 100 comporte en outre des capteurs permettant d'acquérir des signaux relatifs à son fonctionnement, ainsi qu'une unité de commande électronique (UCE) permettant de traiter les signaux issus de ces capteurs et notamment d'encoder et de transmettre au moins une partie de ces signaux au serveur 107 conformément à un protocole de communication adapté.

Le serveur 107 est un serveur de traitement de données comprenant une mémoire et une unité de traitement, par exemple un processeur. Le processeur est configuré par des instructions de programme d'ordinateur enregistrées dans la mémoire pour mettre en oeuvre les étapes d'un procédé de prédiction d'un coefficient de friction selon une réalisation particulière de l'invention. Le serveur 107 comprend également une interface de communication lui permettant d'échanger des messages avec des véhicules, et notamment avec le véhicule 100.

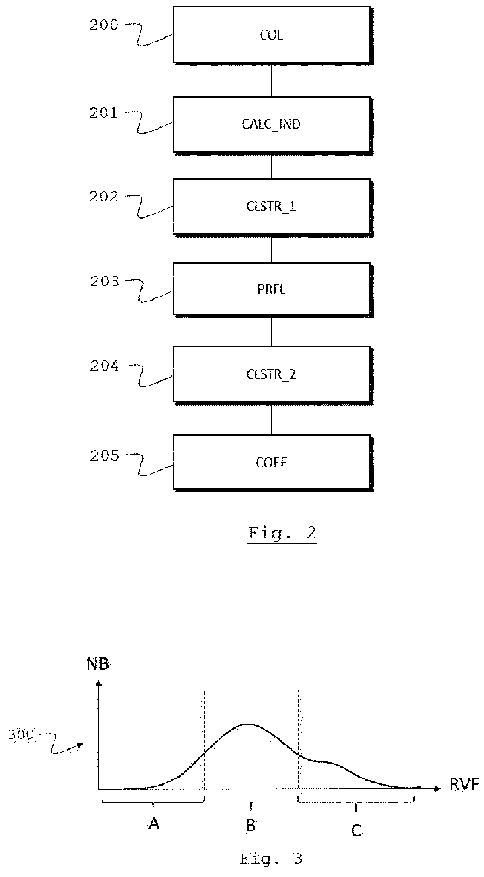

Un mode de réalisation particulier du procédé de prédiction va maintenant être décrit en relation avec la figure 2.

**Lors d'une première étape 200,** le serveur 107 obtient des paramètres de fonctionnement du véhicule 100 et au moins une caractéristique du segment routier 101 sur lequel circule le véhicule 100.

Les paramètres de fonctionnement sont par exemple obtenus par le véhicule 101 à partir de capteurs adaptés, comme par exemple des capteurs de vitesse de rotation des roues, ou des capteurs de pression dans un système de freinage du véhicule, et transmis au serveur 107 dans un message adapté par l'intermédiaire du réseau d'accès 105 et du réseau de communication 106.

Dans un mode de réalisation particulier, les paramètres de fonctionnement du véhicule 100 reçus par le serveur 107 correspondent à un ou plusieurs paramètres sélectionnés parmi les paramètres suivants :

- Vitesse des roues motrices,
- Vitesse des roues libres,
- Accélération longitudinale,
- Accélération transversale,
- Vitesse du véhicule,
- Couple des roues motrices,
- Pression dans le maitre-cylindre de frein,
- Enfoncement de la pédale de frein,
- Etc.

Le serveur 107 obtient au moins une caractéristique du segment routier 101 sur lequel circule le véhicule 100 à partir d'une position géographique transmise par le véhicule. Les caractéristiques du segment routier obtenues peuvent comprendre, dans une réalisation particulière, une caractéristique de revêtement de la chaussée du segment 101 et/ou une caractéristique météo de surface du segment routier 101 lorsque le véhicule circule sur ce segment.

La caractéristique de revêtement correspond par exemple à la nature de la chaussée (enrobé, béton, gravillons, etc.), à son usure ou à son âge, ou encore au type de voie (voie express, autoroute, chemin, etc.).

La caractéristique météo de surface correspond à l'état de la chaussée : route mouillée, verglas, neige, route seiche, etc.

Dans une réalisation particulière, les caractéristiques de revêtement et météo de surface sont combinées en un unique indice de friction de la chaussée.

Le serveur 107 obtient les caractéristiques du segment routier 101 en interrogeant par exemple une base de données 108 dans laquelle sont mémorisés des types de revêtement de segments routiers en association avec des positions géographiques. Le serveur 107 effectue des requêtes vers la base de données 108 pour obtenir les caractéristiques de la chaussée à la position du véhicule. Il peut en outre interroger un service météo approprié pour déterminer une caractéristique météo de surface à l'emplacement du véhicule.

**Lors d'une étape 201,** le serveur 107 calcule un indicateur à partir des paramètres de fonctionnement du véhicule reçus à l'étape 200. Selon un mode de réalisation particulier, le calcul est réalisé à partir de paramètres de fonctionnement du véhicule 100 acquis sur une fenêtre temporelle particulière, par exemple sur une fenêtre temporelle de quelques secondes correspondant au début d'une manoeuvre particulière. Par exemple, une fenêtre temporelle 1,5 secondes en début de freinage est pertinente car elle représente un mouvement très dynamique du véhicule.

L'indicateur comprend au moins une grandeur mathématique calculée de manière à mettre en évidence certaines caractéristiques dynamique du véhicule à partir de paramètres obtenus.

Quelques exemples non limitatifs de telles grandeurs mathématiques :

- L'amplitude du ratio :

$$\frac{Delta\ de\ l'accélération\ longitudinale^3}{moyenne\ mobile\ de\ l'enfoncement\ de\ la\ pédale\ de\ frein}$$

- L'amplitude du ratio :

$$\frac{Vitesse\ du\ véhicule}{moyenne\ mobile\ de\ l'enfoncement\ de\ la\ pédale\ de\ frein}$$

- Minimum du delta de la vitesse du véhicule
- Percentile 90th :

$$Vitesse\ des\ roues\ motrices - Vitesse\ des\ roues\ non\ motrices$$

- Maximum :

$$\frac{(Vitesse\ des\ roues\ motrices - Vitesse\ des\ roues\ non\ motrices)}{Vitesse\ des\ roues\ non\ motrices}$$

- Media du ratio :

$$\frac{Vitesse\ des\ roues\ motrices}{Vitesse\ des\ roues\ non\ motrices}$$

- Maximum d ratio :

$$\frac{(Vitesse\ des\ roues\ non\ motrices - Vitesse\ des\ roues\ motrices)^3}{Moyenne\ mobile\ de\ l'enfoncement\ de\ la\ pédale\ de\ frein}$$

D'autres types de calcul d'un indicateur peuvent être envisagés.

**A l'étape 202,** le serveur 107 détermine une catégorie frictionnelle du véhicule 100 selon la valeur de l'indicateur calculé et de la au moins une caractéristique du segment routier obtenue. Ainsi, à partir des valeurs de paramètres relatifs à la dynamique d'un véhicule sur une route dont les caractéristiques sont connues, on identifie une catégorie pour le véhicule, la catégorie (ou groupe) étant associé à un comportement frictionnel particulier du véhicule pour des conditions de route particulières.

La figure 3 est un graphique réalisé à partir des données collectées par des véhicules d'entrainement sur un revêtement de route particulier et une météo de surface particulière. Le graphique présente une répartition de véhicules d'entrainement selon leur performance frictionnelle, avec en ordonnée un nombre (NBV) de véhicules d'entrainement et en abscisse un coefficient de friction (RVF). Le graphique de la figure 3 est par exemple obtenu à partir des données collectées par les véhicules d'entrainement au cours de leur circulation sur le segment routier 101 de la figure 1, dans des conditions de route C1.

La courbe représentée sur le graphique de la figure 3 met en évidence trois groupes de véhicules A, B et C. Dans cet exemple, les véhicules du groupe A ont un faible coefficient de friction dans les conditions de route du segment C1., alors que les véhicules des groupes B et C ont un coefficient de friction plus élevé dans les mêmes conditions de route.

Dans une réalisation particulière, la catégorie du véhicule 100 est déterminée parmi un ensemble de catégories. L'ensemble des catégories est déterminé par un modèle d'apprentissage non supervisé appliqué, au cours d'une phase d'apprentissage préalable, à des données collectées auprès d'une flotte de véhicules d'entrainement hétérogènes circulant sur divers segments du réseau routier dans diverses conditions météo.

Les véhicules d'entrainement sont adaptés pour estimer un coefficient de friction entre leurs pneus et la chaussée sur laquelle ils circulent. Dans ce but, ils peuvent par exemple mettre en oeuvre des capteurs et/ou des algorithmes particuliers permettant de déterminer, au cours d'une manœuvre particulière, un coefficient de friction.

Les véhicules d'entrainement disposent en outre de moyens de communication pour transmettre au serveur 107 le coefficient de friction ainsi estimé et la position géographique correspondant à l'estimation. A partir de la position transmise, le serveur 107 consulte la base de données 108 pour obtenir une caractéristique de revêtement et une caractéristique de météo de surface de l'emplacement auquel la friction est estimée.

Le serveur 107 effectue alors une classification non supervisée des données collectées par la pluralité de véhicules d'entrainement dans diverses conditions de route et de météo pour déterminer des groupes, ou catégories, de véhicules d'entrainement. Par exemple, le serveur 107 peut appliquer un algorithme de type mean-shift à des données transmises par des véhicules d'entrainement pour déterminer des catégories de véhicule, selon la valeur du coefficient de friction estimé pour des conditions de route particulières. Chaque groupe ainsi obtenu comprend des véhicules d'entrainement présentant un comportement frictionnel similaire pour des conditions de revêtement et de météo données. Autrement dit, un groupe est constitué de véhicules dont le coefficient de friction estimé est compris dans une même fourchette de valeurs pour un segment routier et une météo donnés.

En référence à la figure 3, l'algorithme de partitionnement des données, (de « clusterisation ») mis en oeuvre par le serveur 107 permet par exemple de définir trois groupes de véhicules selon les caractéristiques frictionnelles des véhicules sur le segment 101 dans les conditions C1.

De cette façon, le procédé permet d'obtenir un ensemble fini de groupes, chaque groupe correspondant à un comportement frictionnel de véhicule particulier.

Dans une réalisation particulière, le serveur 107 détermine la catégorie frictionnelle du véhicule 100 en utilisant un modèle d'apprentissage entrainé, au cours d'une phase d'apprentissage préalable, à partir de données collectées auprès d'une flotte de véhicules d'entrainement hétérogènes circulant sur divers segments du réseau routier dans diverses conditions météo.

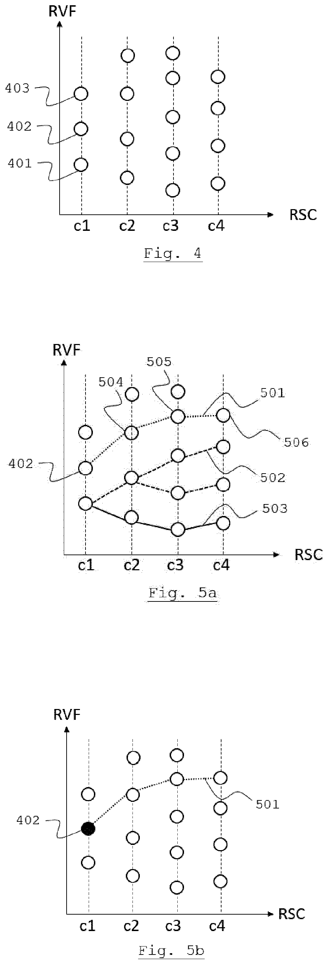

La figure 4 représente un ensemble de catégories (ou « clusters ») de véhicules déterminé pour des conditions de route C1 à C4 à partir des données collectées par les véhicules d'entrainement. Sur la figure, chaque cluster est représenté par un disque positionné dans un repère dont l'ordonnée dépend du coefficient de friction moyen des véhicules du cluster et l'abscisse d'une caractéristique du segment routier.

Par exemple, la figure 4 montre trois catégories de véhicules 401 à 403 identifiées selon la technique décrite ci-avant à partir des données collectées par des véhicules d'entrainement dans des conditions de route C1.

Il est proposé de déterminer la catégorie 401 à 403 à laquelle appartient le véhicule 100 lorsqu'il circule sur le réseau routier dans les conditions de route C1.

Pour cela, dans un mode de réalisation particulier, le serveur 107 met en oeuvre un modèle d'apprentissage supervisé. Le modèle est entraîné à partir de données collectées par les véhicules d'entrainement décrits ci-avant, les données collectées par un véhicule à un instant donné comprenant en outre des paramètres de fonctionnement du véhicule d'entrainement.

Ses paramètres de fonctionnement sont par exemple obtenus par un véhicule d'entrainement à partir de capteurs adaptés, comme des capteurs de vitesse de rotation des roues, ou des capteurs de pression dans un système de freinage du véhicule, et transmis au serveur 107 dans un message adapté par l'intermédiaire du réseau d'accès 105.

Dans un mode de réalisation particulier, les paramètres de fonctionnement capturés par les véhicules d'entrainement sont des paramètres sélectionnés parmi les paramètres suivants :

- Vitesse des roues motrices,
- Vitesse des roues libres,
- Accélération longitudinale,
- Accélération transversale,
- Vitesse du véhicule,
- Couple des roues motrices,
- Pression dans le maitre-cylindre de frein,
- Enfoncement de la pédale de frein,
- Etc.

A partir de ces paramètres de fonctionnement de véhicules d'entrainement, le serveur 107 calcule un indicateur selon la méthode décrite ci-avant, puis, pour chaque donnée collectée à un instant de collecte par d'un véhicule d'entrainement, le serveur 107 crée un vecteur caractéristique comprenant au moins :

- L'indicateur calculé à partir d'au moins un paramètre de fonctionnement du véhicule d'entrainement collecté à l'instant de collecte,
- Une caractéristique de revêtement routier sur lequel circule le véhicule d'entrainement, et
- Une caractéristique météo de surface du segment routier sur lequel circule le véhicule d'entrainement,

On associe ensuite la catégorie identifiée pour le véhicule d'entrainement suite à l'étape de classification non supervisée, au vecteur caractéristique ainsi créé. De cette façon, le serveur 107 obtient des variables d'apprentissage du modèle d'apprentissage supervisé, la cible d'apprentissage du modèle étant la catégorie auquel est affecté le véhicule.

Le modèle est ainsi entraîné à partir d'une pluralité de vecteurs caractéristiques associés à des catégories de véhicules de façon à obtenir un modèle capable de prédire la catégorie frictionnelle d'un véhicule à partir de paramètres de fonctionnement du véhicule dans des conditions de données. Le groupe auquel est affecté un véhicule étant caractéristique du comportement frictionnel de ce véhicule pour des conditions de route particulière, le serveur 107 obtient ainsi un modèle capable de prédire le comportement frictionnel d'un véhicule qui n'est pas spécifiquement adapté pour estimer un coefficient de friction.

Un tel modèle d'apprentissage supervisé une fois entraîné est appliqué par le serveur 107 aux données reçues en provenance du véhicule 101 afin de déterminer un groupe caractéristique de son comportement frictionnel. Le serveur applique le modèle d'apprentissage entraîné à :

- Un indicateur calculé à partir d'au moins un paramètre de fonctionnement du véhicule sur le premier segment,
- La caractéristique de revêtement routier du premier segment, et
- La caractéristique météo de surface du premier segment.

Le serveur obtient ainsi, en sortie du modèle d'apprentissage supervisé, une catégorie du véhicule 101 pour les conditions de route C1, la catégorie étant représentative du comportement frictionnel du véhicule 101 dans les conditions C1.

A partir du groupe ainsi déterminé pour le véhicule 101, le serveur 107 sélectionne un profil de friction du véhicule **lors d'une étape 203.**

Au sens de l'invention, un profil de friction est défini par l'ensemble des catégories frictionnelles (ou groupes) auxquels appartient le véhicule.

Le figure 5a montre trois profils 501, 502 et 503. Le profil 501 s'applique par exemple aux véhicules dont le comportement frictionnel correspond au cluster 502 dans des conditions C1, au cluster 504 dans des conditions C2, au cluster 505 dans des conditions C3 et au cluster 506 dans des conditions de route C4.

Les différents profils sont déterminés en étudiant les catégories dans lesquelles sont répartis les véhicules d'entrainement selon les conditions de route.

Le profil du véhicule 100 est sélectionné parmi les profils ainsi définis, selon la catégorie sa frictionnelle déterminée dans les conditions de route C1. Par exemple, en référence à la figure 5b, lorsqu'un véhicule est affecté au cluster 402 dans les conditions de route C1, le profil 501 est sélectionné sans ambiguïté.

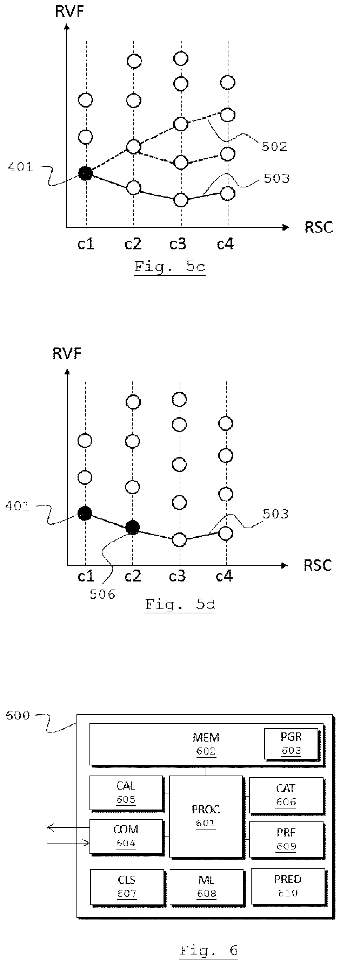

Toutefois, la connaissance d'un groupe auquel appartient un véhicule dans des conditions particulière peut ne pas suffire à sélectionner un profil de façon non ambiguë. Par exemple, la figure 5c montre qu'un véhicule appartenant au cluster 401 dans les conditions C2 peut avoir un profil 502 ou un profil 503. En effet, le cluster 401 appartient aux deux profils 502 et 503.

Dans une réalisation particulière, le profil de friction est déterminé à partir de comportements frictionnels du véhicule déterminés pour une pluralité de segments routiers. Ainsi par exemple, en référence à la figure 5d, la connaissance des clusters 401 et 506 d'un véhicule, correspondants respectivement à son comportement frictionnel dans des conditions de route C1 et C2, permet de déterminer le profil du véhicule sans ambiguïté parmi les profils candidats 502 et 503.

**Lors d'une étape 204,** le serveur 107 détermine la catégorie frictionnelle du véhicule pour un segment routier à venir.

Le serveur obtient les caractéristiques d'au moins un segment routier particulier pour lequel doit être prédit le comportement frictionnel du véhicule 100. Par exemple, il reçoit un message en provenance du véhicule, dans lequel le véhicule 100 indique les segments sur lesquels il est susceptible de circuler, comme les segments 102, 103 et 107. En variante, ces segments peuvent être déterminés par le serveur en exécutant un algorithme de calcul de chemin à partir de la position du véhicule 100. Les segments peuvent être identifiés par une ou plusieurs localisations géographiques ou par un identifiant unique de segment, à partir desquels le serveur 107 effectue une recherche dans la base de données 108 et/ou d'un service météo adapté afin d'obtenir les caractéristiques C2, C3 et C4 correspondant respectivement aux segments 102, 103 et 104.

A partir du profil sélectionné à l'étape 203 pour le véhicule 100, et des caractéristiques de revêtement et/ou de météo déterminées pour les segments 102 à 104, le serveur détermine la catégorie frictionnelle du véhicule 100, c'est-à-dire le cluster auquel le véhicule appartient, pour ces différents segments. Par exemple, en référence à la figure 5a, lorsque le profil 501 est sélectionné pour le véhicule 100, le serveur 107 peut déterminer que ce même véhicule appartient au cluster 504 pour les conditions de route C2, au cluster 505 pour les conditions de route C3 et au cluster 506 pour les conditions de C4.

**A l'étape 205,** le serveur 107 détermine un coefficient de friction, ou un intervalle de valeurs de coefficient de friction personnalisé pour chaque segment 102 à 104. Chaque cluster étant composé de véhicules dont les coefficients de friction sont proches pour des conditions de route particulières, il est possible d'associer à chaque cluster une valeur moyenne des coefficients de friction des véhicules le composant. Ainsi, à partir d'un cluster représentatif de la catégorie frictionnelle d'un véhicule, le serveur obtient une valeur de coefficient de friction.

Dans une réalisation particulière, le procédé comporte une étape de personnalisation d'une carte routière numérique à partir de données de friction adaptées pour un véhicule particulier.

Pour cela, il est proposé d'associer à un segment routier le coefficient de friction déterminée pour un véhicule sur le segment routier considéré selon les étapes décrites précédemment. Le coefficient de friction peut être associé à la carte de différentes manières, par exemple sous la forme de méta données, ou d'une association entre un identifiant du segment et la valeur de coefficient déterminée.

Dans un mode particulier de réalisation, le serveur transmet la carte personnalisée au véhicule 100 par l'intermédiaire du réseau d'accès 105.

A la réception de la carte de friction personnalisée, le véhicule 100 peut configurer des dispositifs de sécurité selon le coefficient de friction déterminé pour un segment sur lequel il s'engage.

La figure 6 représente l'architecture d'un dispositif 600 adapté pour mettre en oeuvre le procédé de prédiction selon un mode de réalisation particulier.

Le dispositif 600 comprend un espace de stockage 602, par exemple une mémoire MEM, une unité de traitement 601 équipée par exemple d'un processeur PROC. L'unité de traitement peut être pilotée par un programme 603, par exemple un programme d'ordinateur PGR, mettant en oeuvre le procédé de prédiction tel que décrit précédemment en référence à la figure 2, et notamment les étapes d'obtention de paramètres de fonctionnement du véhicule et d'au moins une caractéristique du premier segment routier, de calcul d'un indicateur à partir des paramètres de fonctionnement du véhicule obtenus, de détermination d'une catégorie frictionnelle du véhicule selon la valeur de l'indicateur calculé et de la au moins une caractéristique du segment routier obtenue, de sélection d'un profil de friction du véhicule à partir de la catégorie frictionnelle déterminée, et de détermination d'un coefficient de friction du véhicule par application du profil sélectionné à au moins une caractéristique du second segment routier.

À l'initialisation, les instructions du programme d'ordinateur 603 sont par exemple chargées dans une mémoire RAM (Random Access Memory en anglais) avant d'être exécutées par le processeur de l'unité de traitement 601. Le processeur de l'unité de traitement 601 met en oeuvre les étapes du procédé de notification selon les instructions du programme d'ordinateur 603.

Pour cela, le dispositif 600 comprend, outre la mémoire 602, des moyens de communication 604, par exemple une interface réseau COM de type Ethernet, permettant au dispositif de se connecter à un réseau de communication et d'échanger des messages avec d'autres dispositifs, et en particulier de recevoir des paramètres de fonctionnement et une localisation d'un véhicule connecté. L'interface réseau 604 peut être pilotée par des instructions de programme d'ordinateur configurées pour effectuer des requêtes dans une base de données ou auprès d'un service météo distant afin d'obtenir, pour une localisation géographique donnée, des conditions de route comprenant par exemple un type de revêtement de la chaussée et une météo de surface. Dans un mode de réalisation particulier, l'interface réseau 604 est en outre configurée pour transmettre à un véhicule une carte ou une partie de carte routière numérique à laquelle ont été associées des valeurs de coefficient de friction personnalisées pour le véhicule destinataire.

Le dispositif comprend également des moyens de calcul 605, par exemple un calculateur CAL, adaptés pour calculer un indicateur représentatif d'un comportement dynamique particulier d'un véhicule à partir de paramètres de fonctionnement du véhicule. Les moyens de calcul 605 sont mis en oeuvre par des instructions de programme d'ordinateur configurées pour calculer un indicateur à partir de paramètres de fonctionnement d'un véhicule reçus par le module de communication 604. Par exemple, les instructions sont configurées pour mettre en oeuvre, lorsqu'elles sont exécutées par le processeur 601, le calcul de grandeurs mathématiques telles que décrites ci-avant en relation avec l'étape 201 du procédé de prédiction.

Le dispositif 600 comprend aussi un module 606 de détermination d'une catégorie frictionnelle du véhicule selon la valeur de l'indicateur calculé et au moins une caractéristique d'un segment routier obtenue par le module de communication 604.

Pour cela, le module 606 peut utiliser un module de classification non supervisé 607, par exemple un classifieur CLS, alimenté par des données obtenues à partir d'une flotte véhicules d'entrainement, une donnée comprenant notamment pour un instant de collecte, un coefficient de friction estimé, une condition météo de surface et une caractéristique de revêtement du segment routier sur lequel circule le véhicule d'entrainement à l'instant de collecte. Le classifieur CLS est par exemple mis en oeuvre par des instructions de programme d'ordinateur adaptées pour exécuter un algorithme de clusterisation de type mean-shift. De cette façon, le classifieur 607 permet l'obtention d'une pluralité de catégories frictionnelles auxquelles représentatives du comportement frictionnel des véhicules dans des conditions de route particulières.

Le module 606 utilise également un module de prédiction 608, par exemple un réseau de neurones ML, adapté pour prédire une catégorie frictionnelle d'un véhicule pour une caractéristique de route particulière. Le module 608 est entraîné avec des données collectées par des véhicules d'entrainement, comportant pour chaque instant de collecte, une caractéristique de revêtement routier, une caractéristique météo de surface, un indicateur calculé par le module de calcul 605 à partir de paramètres de fonctionnement du véhicule d'entrainement, et la catégorie frictionnelle du véhicule d'entrainement pour lesdites conditions de route. De cette façon, le module ainsi entraîné peut prédire une catégorie frictionnelle d'un véhicule à partir de conditions de route et de paramètres de fonctionnement du véhicule. Un tel module peut être mis en oeuvre par des instructions de programme d'ordinateur adaptées pour être exécutées par le processeur PROC de l'unité de traitement 601.

Le dispositif 600 comprend également des moyens 609 de détermination d'un profil de friction pour un véhicule. Les moyens 609 sont par exemple mis en oeuvre par un programme d'ordinateur exécuté par le processeur PROC de l'unité de traitement du dispositif, et configuré pour sélectionner un profil de friction dans un ensemble prédéfini de profils selon au moins une catégorie frictionnelle du véhicule déterminée par le module 606. Pour cela, le module 609 peut accéder à une base de données dans laquelle sont enregistrés des profils de friction en association avec des catégories frictionnelles les composant. Ainsi, le module 609 peut effectuer une requête SQL comprenant en paramètre une ou plusieurs catégories frictionnelles afin d'obtenir en retour un profil comprenant ces profils.

Le dispositif comprend enfin des moyens 310 de détermination d'un coefficient de friction d'un véhicule sur un second segment routier. Les moyens 310 sont par exemple mis en oeuvre par des instructions de programme d'ordinateur configurées pour appliquer le profil sélectionné par le module 609 à au moins une caractéristique du second segment routier et déterminer une catégorie frictionnelle du véhicule sur le second segment routier. A partir de la catégorie frictionnelle ainsi déterminée, les instructions sont en outre configurées pour obtenir une valeur moyenne de friction associée à la catégorie frictionnelle.

Selon une réalisation particulière, le dispositif comprend en outre un module de personnalisation d'une carte routière numérique. Le module de personnalisation est par exemple mis en oeuvre par des instructions de programme d'ordinateur enregistrées dans la mémoire 602 du dispositif et configurées de sorte que, lorsqu'elles sont exécutées par le processeur PROC, un coefficient de friction prédit pour un segment routier sur lequel un véhicule est susceptible de s'engager est associé à une représentation du segment sur la carte routière.

Dans un mode de réalisation particulier, le dispositif est compris dans un serveur.

**Revendications**

1. Procédé de prédiction, pour un véhicule automobile circulant sur un premier segment routier, d'un coefficient de friction futur du véhicule sur un second segment routier, le procédé comprenant les étapes suivantes :

   - Obtention (200) de paramètres de fonctionnement du véhicule et d'au moins une caractéristique du premier segment routier,
   - Calcul (201) d'un indicateur à partir des paramètres de fonctionnement du véhicule obtenus,
   - Détermination (202) d'une catégorie frictionnelle du véhicule selon la valeur de l'indicateur calculé et de la au moins une caractéristique du segment routier obtenue,
   - Sélection (203) d'un profil de friction du véhicule à partir de la catégorie frictionnelle déterminée,
   - Détermination (204, 205) d'un coefficient de friction du véhicule par application du profil sélectionné à au moins une caractéristique du second segment routier,

   le procédé étant **caractérisé en ce que** la au moins une caractéristique des premiers et seconds segments routier comprend, pour un segment considéré :

   - Une caractéristique de revêtement de la chaussée, et
   - Une caractéristique météo de surface.

2. Procédé selon la revendication 1 dans lequel l'indicateur est calculé à partir d'au moins un paramètre de fonctionnement du véhicule sélectionné parmi les paramètres suivants :

   - Vitesse des roues motrices,
   - Vitesse des roues libres,
   - Accélération longitudinale,
   - Accélération transversale,
   - Vitesse du véhicule,
   - Couple des roues motrices,
   - Pression dans le maitre-cylindre de frein,
   - Enfoncement de la pédale de frein.

3. Procédé selon l'une quelconque des revendications 1 à 2 dans lequel un profil de friction est sélectionné parmi un ensemble de profils frictionnels, l'ensemble des profils étant déterminé selon les étapes suivantes :

   - Collecte, pour une pluralité d'instants de collecte, de données de véhicules d'entrainement, une donnée d'un véhicule d'entrainement comprenant au moins pour un instant donné :

     o Une caractéristique de revêtement routier,
     o Une caractéristique météo de surface, et
     o Un coefficient de friction estimé par le véhicule,

   - Détermination d'une pluralité de catégories frictionnelles de véhicules par classification non supervisée des données collectées, de sorte qu'une catégorie frictionnelle particulière comprend des véhicules ayant un coefficient de friction compris dans un même intervalle de valeurs pour une caractéristique de revêtement et une caractéristique météo données,
   - Détermination d'au moins un profil de friction de véhicule, un profil de friction étant défini par un ensemble de catégories frictionnelles auxquelles un véhicule particulier est affecté.

4. Procédé selon la revendication 3 dans lequel la sélection d'un profil de friction pour un véhicule comprend :

- une phase d'entrainement d'un modèle d'apprentissage comprenant les étapes suivantes :

o Pour une donnée collectée par un véhicule d'entrainement à un instant de collecte, création d'un vecteur caractéristique comprenant au moins :

■ Un indicateur calculé à partir d'au moins un paramètre de fonctionnement du véhicule d'entrainement collecté à l'instant de collecte,
■ La caractéristique de revêtement routier, et
■ La caractéristique météo de surface,

o Entrainement d'un modèle d'apprentissage à partir du vecteur caractéristique associé à la catégorie frictionnelle du véhicule déterminée pour la donnée collectée,

- une phase de prédiction au cours de laquelle :

o une catégorie frictionnelle d'un véhicule circulant sur le premier segment est prédite par application du modèle d'apprentissage à :

■ Un indicateur calculé à partir d'au moins un paramètre de fonctionnement du véhicule sur le premier segment,
■ La caractéristique de revêtement routier du premier segment, et
■ La caractéristique météo de surface du premier segment,

o Un profil de friction est sélectionné au moins à partir de la catégorie frictionnelle prédite pour le véhicule sur le premier segment.

5. Procédé selon l'une quelconque des revendications précédentes dans lequel le profil de friction est déterminé à partir d'au moins deux catégories frictionnelles du véhicule déterminées pour au moins deux premiers segments routiers.

6. Dispositif de prédiction, pour un véhicule automobile circulant sur un premier segment routier, d'un coefficient de friction futur entre les pneus du véhicule et la chaussée d'un second segment routier, le dispositif comprenant :

- Un module de communication (604) adapté pour obtenir des paramètres de fonctionnement du véhicule et au moins une caractéristique du premier segment routier,
- Un calculateur (605) adapté pour calculer un indicateur à partir des paramètres de fonctionnement du véhicule obtenus,
- Un module (606) de détermination d'une catégorie frictionnelle du véhicule selon la valeur de l'indicateur calculé et de la au moins une caractéristique du segment routier obtenue,
- Un module (609) de sélection d'un profil de friction du véhicule à partir de la catégorie frictionnelle déterminée, et
- Un module (610) de détermination d'un coefficient de friction du véhicule par application du profil sélectionné à au moins une caractéristique du second segment routier,

le dispositif étant **caractérisé en ce que** la au moins une caractéristique des premiers et seconds segments routier comprend, pour un segment considéré :

- Une caractéristique de revêtement de la chaussée, et
- Une caractéristique météo de surface.

7. Serveur comprenant un dispositif selon la revendication 6.

**Patentansprüche**

1. Verfahren zur Vorhersage, für ein Kraftfahrzeug, das auf einem ersten Straßenabschnitt fährt, eines künftigen Reibungskoeffizienten des Fahrzeugs auf einem zweiten Straßenabschnitt, wobei das Verfahren die folgenden Schritte umfasst:

- Erhalten (200) von Betriebsparametern des Fahrzeugs und wenigstens eines Merkmals des ersten Straßenabschnitts,
- Berechnen (201) eines Indikators anhand der erhaltenen Betriebsparameter des Fahrzeugs,
- Bestimmen (202) einer Reibungskategorie des Fahrzeugs gemäß dem Wert des berechneten Indikators und des erhaltenen wenigstens einen Merkmals des Straßenabschnitts,
- Auswählen (203) eines Reibungsprofils des Fahrzeugs anhand der bestimmten Reibungskategorie,
- Bestimmen (204, 205) eines Reibungskoeffizienten des Fahrzeugs durch Anwendung des ausgewählten Profils auf wenigstens ein Merkmal des zweiten Straßenabschnitts,

wobei das Verfahren **dadurch gekennzeichnet ist, dass** das wenigstens eine Merkmal der ersten und zweiten Straßenabschnitte für einen betrachteten Abschnitt Folgendes umfasst:

- ein Fahrbahnbelagsmerkmal, und
- ein Oberflächenwettermerkmal.

2. Verfahren nach Anspruch 1, wobei der Indikator anhand wenigstens eines Betriebsparameters des Fahrzeugs berechnet wird, der aus den folgenden Parametern ausgewählt wird:

- Drehzahl der Antriebsräder,
- Drehzahl der frei laufenden Räder,
- Längsbeschleunigung,
- Querbeschleunigung,
- Geschwindigkeit des Fahrzeugs,
- Drehmoment der Antriebsräder,
- Druck im Hauptbremszylinder,
- Niederdrückung des Bremspedals.

3. Verfahren nach einem der Ansprüche 1 bis 2, wobei ein Reibungsprofil aus einer Menge von Reibungsprofilen ausgewählt wird, wobei die Menge der Profile gemäß den folgenden Schritten bestimmt wird:

- Sammeln von Trainingsfahrzeugdaten für eine Mehrzahl von Sammelzeitpunkten, wobei ein Datenelement eines Trainingsfahrzeugs für einen bestimmten Zeitpunkt wenigstens Folgendes umfasst:

    o ein Straßenbelagsmerkmal,
    o ein Oberflächenwettermerkmal, und
    o einen vom Fahrzeug geschätzten Reibungskoeffizienten,

- Bestimmen einer Mehrzahl von Reibungskategorien von Fahrzeugen durch nicht-überwachte Klassifizierung der gesammelten Daten, so dass eine bestimmte Reibungskategorie Fahrzeuge mit einem Reibungskoeffizienten umfasst, der in ein und demselben Wertebereich für ein bestimmtes Belagsmerkmal und ein bestimmtes Wettermerkmal liegt,
- Bestimmen wenigstens eines Fahrzeugreibungsprofils, wobei ein Reibungsprofil durch eine Menge von Reibungskategorien definiert ist, denen ein bestimmtes Fahrzeug zugeordnet ist.

4. Verfahren nach Anspruch 3, wobei das Auswählen eines Reibungsprofils für ein Fahrzeug Folgendes umfasst:

- eine Phase des Trainierens eines Lernmodells, die die folgenden Schritte umfasst:

    o für ein Datenelement, das von einem Trainingsfahrzeug zu einem Sammelzeitpunkt gesammelt wird, Erstellen eines charakteristischen Vektors, der wenigstens Folgendes umfasst:

        ▪ einen Indikator, der anhand wenigstens eines Betriebsparameters des Trainingsfahrzeugs berechnet wird, der zum Sammelzeitpunkt gesammelt wird,
        ▪ das Straßenbelagsmerkmal, und
        ▪ das Oberflächenwettermerkmal,

    o Trainieren eines Lernmodells anhand des charakteristischen Vektors, der der Reibungskategorie des Fahrzeugs zugeordnet ist, die für das gesammelte Datenelement bestimmt wird,

- eine Phase des Vorhersagens, in deren Verlauf:

o eine Reibungskategorie eines Fahrzeugs, das auf dem ersten Abschnitt fährt, durch Anwendung des Lernmodells auf Folgendes vorhergesagt wird:

■ einen Indikator, der anhand wenigstens eines Betriebsparameters des Fahrzeugs auf dem ersten Abschnitt berechnet wird,
■ das Straßenbelagsmerkmal des ersten Abschnitts, und
■ das Oberflächenwettermerkmal des ersten Abschnitts,

o ein Reibungsprofil wenigstens anhand der Reibungskategorie ausgewählt wird, die für das Fahrzeug auf dem ersten Abschnitt vorhergesagt ist.

5. Verfahren nach einem der vorhergehenden Ansprüche, wobei das Reibungsprofil anhand wenigstens zweier Reibungskategorien des Fahrzeugs bestimmt wird, die für wenigstens zwei erste Straßenabschnitte bestimmt sind.

6. Vorrichtung zur Vorhersage, für ein Kraftfahrzeug, das auf einem ersten Straßenabschnitt fährt, eines künftigen Reibungskoeffizienten zwischen den Reifen des Fahrzeugs und der Fahrbahn eines zweiten Straßenabschnitts, wobei die Vorrichtung Folgendes umfasst:

- ein Kommunikationsmodul (604), das geeignet ist, Betriebsparameter des Fahrzeugs und wenigstens ein Merkmal des ersten Straßenabschnitts zu erhalten,
- einen Rechner (605), der geeignet ist, einen Indikator anhand der erhaltenen Betriebsparameter des Fahrzeugs zu berechnen,
- ein Modul (606) zur Bestimmung einer Reibungskategorie des Fahrzeugs gemäß dem Wert des berechneten Indikators und des erhaltenen wenigstens einen Merkmals des Straßenabschnitts, - Ein Modul (609) zum Auswählen eines Reibungsprofils des Fahrzeugs anhand der bestimmten Reibungskategorie, und
- ein Modul (610) zum Bestimmen eines Reibungskoeffizienten des Fahrzeugs durch Anwendung des ausgewählten Profils auf wenigstens ein Merkmal des zweiten Straßenabschnitts,

wobei die Vorrichtung **dadurch gekennzeichnet ist, dass** das wenigstens eine Merkmal der ersten und zweiten Straßenabschnitte für einen betrachteten Abschnitt Folgendes umfasst:

- ein Fahrbahnbelagsmerkmal, und
- ein Oberflächenwettermerkmal.

7. Server, der eine Vorrichtung nach Anspruch 6 umfasst.

**Claims**

1. Method for predicting, for a motor vehicle traveling on a first road segment, a future coefficient of friction of the vehicle on a second road segment, the method comprising the following steps:

- obtaining (200) operating parameters of the vehicle and at least one characteristic of the first road segment;
- computing (201) an indicator on the basis of the obtained operating parameters of the vehicle;
- determining (202) a frictional category of the vehicle according to the value of the computed indicator and of the at least one obtained characteristic of the road segment;
- selecting (203) a friction profile of the vehicle on the basis of the determined frictional category;
- determining (204, 205) a coefficient of friction of the vehicle by applying the selected profile to at least one characteristic of the second road segment;

the method being **characterized in that** the at least one characteristic of the first and second road segments comprises, for a considered segment:

- a surface characteristic of the roadway; and
- a surface weather characteristic.

2. Method according to Claim 1, wherein the indicator is computed on the basis of at least one operating parameter of the vehicle selected from the following parameters:

- speed of the driving wheels;
- speed of the free wheels;
- longitudinal acceleration;
- transverse acceleration;
- speed of the vehicle;
- torque of the driving wheels;
- pressure in the brake master cylinder;
- depression of the brake pedal.

3. Method according to any one of Claims 1 to 2, wherein a friction profile is selected from a set of frictional profiles, with the set of profiles being determined according to the following steps:

- collecting, for a plurality of collection instants, training vehicle data, with a training vehicle data item comprising at least, for a given instant:

   o a road surface characteristic;
   o a surface weather characteristic; and
   o a coefficient of friction estimated by the vehicle;

- determining a plurality of frictional categories of vehicles by unsupervised classification of the collected data, so that a particular frictional category comprises vehicles with a coefficient of friction within the same range of values for a given surface characteristic and weather characteristic;
- determining at least one vehicle friction profile, with a friction profile being defined by a set of frictional categories to which a particular vehicle is assigned.

4. Method according to Claim 3, wherein selecting a friction profile for a vehicle comprises:

- a phase of training a learning model comprising the following steps:

   o creating, for a data item collected by a training vehicle at a collection instant, a characteristic vector comprising at least:

      ▪ an indicator computed on the basis of at least one operating parameter of the training vehicle collected at the collection instant;
      ▪ the road surface characteristic; and
      ▪ the surface weather characteristic;

   o training a learning model on the basis of the characteristic vector associated with the frictional category of the vehicle determined for the collected data item;

- a prediction phase, during which:

   o a frictional category of a vehicle traveling on the first segment is predicted by applying the learning model to:

      ▪ an indicator computed on the basis of at least one operating parameter of the vehicle on the first segment;
      ▪ the road surface characteristic of the first segment; and
      ▪ the surface weather characteristic of the first segment;

   o a friction profile is selected at least on the basis of the frictional category predicted for the vehicle on the first segment.

5. Method according to any one of the preceding claims, wherein the friction profile is determined on the basis of at least two frictional categories of the vehicle determined for at least two first road segments.

6. Device for predicting, for a motor vehicle traveling on a first road segment, a future coefficient of friction between the tires of the vehicle and the roadway of a second road segment, the device comprising:

- a communication module (604) adapted to obtain operating parameters of the vehicle and at least one characteristic of the first road segment;
- a computer (605) adapted to compute an indicator on the basis of the obtained operating parameters of the vehicle;
- a module (606) for determining a frictional category of the vehicle according to the value of the computed indicator and of the at least one obtained characteristic of the road segment;
- a module (609) for selecting a friction profile of the vehicle on the basis of the determined frictional category; and
- a module (610) for determining a coefficient of friction of the vehicle by applying the selected profile to at least one characteristic of the second road segment;

the device being **characterized in that** the at least one characteristic of the first and second road segments comprises, for a considered segment:

- a surface characteristic of the roadway; and
- a surface weather characteristic.

7. Server comprising a device according to Claim 6.

Fig. 1

200 ⌐ [COL]

201 ⌐ [CALC_IND]

202 ⌐ [CLSTR_1]

203 ⌐ [PRFL]

204 ⌐ [CLSTR_2]

205 ⌐ [COEF]

Fig. 2

NB

300

RVF

A       B       C

Fig. 3

Fig. 4

Fig. 5a

Fig. 5b

Fig. 5c

Fig. 5d

Fig. 6

**EP 3 986 759 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2876413 B1
- US 20181244278 A1
- US 2018037234 A